(19) Europäisches Patentamt
European Patent Office
Office européen des brevets

(11) EP 0 505 973 B1

(12) **EUROPEAN PATENT SPECIFICATION**

(45) Date of publication and mention of the grant of the patent:
**30.07.1997 Bulletin 1997/31**

(51) Int Cl.$^6$: **C08F 212/04**, C08F 4/60, C08F 4/602

(21) Application number: **92105028.2**

(22) Date of filing: **24.03.1992**

(54) **Process for producing styrenic copolymer**

Verfahren zur Herstellung eines Styrolpolymerisates

Procédé de préparation d'un copolymère styrénique

(84) Designated Contracting States:
**AT BE CH DE ES FR GB IT LI NL SE**

(30) Priority: **28.03.1991 JP 87301/91**

(43) Date of publication of application:
**30.09.1992 Bulletin 1992/40**

(73) Proprietor: **IDEMITSU KOSAN COMPANY LIMITED**
**Tokyo 100 (JP)**

(72) Inventors:
- **Tazaki, Toshinori**
  **Sodegaura-shi, Chiba-ken (JP)**
- **Tomotsu, Norio**
  **Ichihara-shi, Chiba-ken (JP)**
- **Kuramoto, Masahiko**
  **Ichihara-shi, Chiba-ken (JP)**

(74) Representative: **Türk, Gille, Hrabal, Leifert**
**Brucknerstrasse 20**
**40593 Düsseldorf (DE)**

(56) References cited:
**EP-A- 0 210 615**
**EP-A- 0 277 003**
**EP-A- 0 277 004**
**EP-A- 0 416 815**
**EP-A- 0 417 313**
**EP-A- 0 421 659**
**EP-A- 0 505 890**

- **Lehrbuch der Organischen Chemie, S. Hirzel Verlag Stuttgart, 1988, pages 61, 62, 79 and 80**
- **Makromoleküle, Vol. 1, Dr. Hans-Georg Elias, 1990, page 420**
- **Makromoleküle, Vol. 2, Dr. Hans-Georg Elias, 1992, page 48**

Remarks:
The file contains technical information submitted after the application was filed and not included in this specification

EP 0 505 973 B1

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European Patent Convention).

Printed by Jouve, 75001 PARIS (FR)

## Description

### BACKGROUND OF THE INVENTION

1. Field of the Invention

The present invention relates to a process for producing a styrenic copolymer. More particularly, it pertains to a process for efficiently producing a styrenic copolymer comprising a styrenic monomer and an olefinic monomer or a diolefinic monomer by the use of a specific high-activity catalyst.

2. Description of the Related Arts

Heretofore, styrenic polymers produced by the radical polymerization method have an atactic configuration in stereostructure and are molded to various shapes by various molding methods such as injection molding, extrusion molding, blow molding, vacuum molding and cast molding, and they have been widely used as domestic electrical appliances, office machines, household goods, packaging containers, toys, furnitures, synthetic papers and other industrial materials.

However, such styrenic polymers having atactic configuration have disadvantage that it is inferior in heat resistance and chemical resistance.

The group of the present inventors has previously succeeded in developing styrenic polymers having a high degree of syndiotacticity (see Japanese Patent Application Laid-Open Nos. 104818/1987, 187708/1987, 179906/1988, and 241009/1988).

Since the styrene polymers having a syndiotactic configuration have melting points which are different from those of the conventional atactic polystyrenes, and are higher than those of the isotactic polystyrenes known so far, they are expected to be used as heat-resistant resins in various fields.

Having a glass transition point of 90 to 100°C and a melting point of 250 to 270°C, the above-mentioned polymers, especially syndiotactic polystyrene involve the problem that unless an injection molding temperature is set at a higher level, the characteristics thereof are not sufficiently utilized and that the molding formed with a high temperature mold admits of improvement in flexibility.

The group of the present inventors, however, has recently succeeded in efficiently producing styrene-olefin copolymers and styrene-diolefinic copolymers for the purpose of improving the properties of a styrenic polymer having syndiotactic configuration such as impact resistance, adhesion properties and compatibility, that is, wetting properties with other types of thermoplastic resins and inorganic fillers and lowering the glass transition point of a syndiotactic styrenic polymer (refer to Japanese Patent Application Laid-Open Nos. 7705/1991 and 258811/1990).

The above-mentioned copolymer, although being improved in various aspects of physical properties, requires in the production thereof a catalyst comprising a transition metal compound, especially a titanium compound and an alkylaluminoxane, especially methylalumioxane. The aforementioned catalyst, however, requires expensive trimethylaluminum as the starting raw material of the methylaluminoxane and further an excessively large amount thereof as compared with the requirement of the transition metal compound. Consequently, the aforementioned problems lead to a remarkably high catalyst cost along with a considerable amount of catalyst reduce, which increases the burden on deashing treatment.

### SUMMARY OF THE INVENTION

It is the general object of the present invention to provide a process for effectively producing a styrenic copolymer excellent in various physical properties by the use of new catalyst system without the use of expensive aluminoxane required in a large quantity.

Other objects of the present invention will be obvious from the text of the specification hereinafter disclosed.

As the result of intensive research and investigation made by the present inventors for the purpose of achieving the above-mentioned object, it has been found that the use of a specific coordination complex compound comprising a cation and an anion in which a plurality of radicals are bonded to a metal as the catalyst component in place of the aforestated aluminoxane can attain the foregoing object. The present invention has been accomplished on the basis of the above-described finding and information.

Specifically, the present invention provides a process for producing a styrenic copolymer which comprises copolymerizing (a) a styrenic monomer and (b) an olefinic monomer or a diolefinic monomer in the presence of a catalyst comprising as primary ingredients (A) a transition metal compound and (B) a coordination complex compound comprising a cation and an anion in which a plurality of radicals are bonded to a metal.

DESCRIPTION OF THE PREFERRED EMBODIMENTS

As described hereinbefore, in the process according to the present invention (a) styrenic monomer and (b) an olefinic monomer or a diolefinic monomer are copolymerized. As the component (a) of the starting comonomers there is exemplified a styrenic monomer represented by the general formula (I)

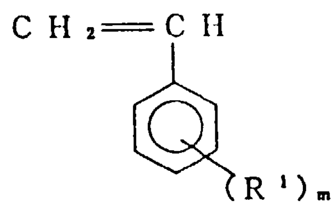

... (I)

wherein $R^1$ is a hydrogen atom, a halogen atom such as chlorine, bromine, fluorine and iodine, a hydrocarbon radical including saturated hydrocarbon radical, especially alkyl having 20 or less, preferably 1 to 10 carbon atoms such as methyl, ethyl, propyl, butyl, pentyl and hexyl, or unsaturated hydrocarbon radical such as vinyl; m is an integer from 1 to 3 and when m is 2 or 3, each $R^1$ may be the same or different.

Specific examples of the styrenic monomer represented by the general formula (I) include styrene; alkylstyrenes such as p-methylstyrene, m-methylstyrene, o-methylstyrene, 2,4-dimethylstyrene, 2,5-dimethylstyrene, 3,4-dimethylstyrene, 3,5-dimethylstyrene, p-ethylstyrene, m-ethylstyrene, p-tert-butylstyrene, p-divinylbenzene and m-divinylbenzene; halogenated styrenes such as p-chlorostyrene, m-chlorostyrene, o-chlorostyrene, p-chlorostyrene, m-bromostyrene, o-bromostyrene, 2,9,6-tribromostyrene, p-fluorostyrene, m-fluorostyrene and o-fluorostyrene.

The component (B) of the starting comonomers consists of an olefinic monomer or a diolefinic monomer. The olefinic monomer is represented by the general formula(II)

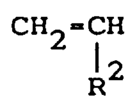

... (II)

wherein $R^2$ is a hydrogen atom or saturated hydrocarbon radical having 20 or less, preferably 1 to 10 carbon atoms. Specific examples of the compound of the formula (II) include ethylene, propylene, 1-butene, 1-pentene, 3-methylbutene-1, 1-hexene, 3-methyl-pentene, 4-methyl-pentene-1, 1-octene and 1-decene, of which are desirable ethylene, propylene, 1-butene, 1-hexene and a mixture of at least two of them and are particularly desirable ethylene, propylene and a mixture thereof.

The diolefinic monomer as one of the starting comonomers is not specifically limited but is roughly divided into 4 types including conjugated straight-chain diolefinic monomer, non-conjugated straight-chain diolefinic monomer, conjugated cyclic diolefinic monomer and non-conjugated cyclic diolefinic monomer. Of these, the conjugated straight chain diolefinic monomer is exemplified by the compound represented by the general formula (III)

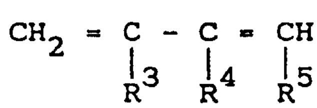

... (III)

wherein $R^3$ and $R^4$ are each a hydrogen atom, an alkyl, aryl or a halogen atom; and $R^5$ is a hydrogen atom or saturated hydrocarbon radical. Specific examples of the compound of the formula (III) include 1,3-butadiene and isoprene; alkyl-substituted butadiene such as 1,3-pentadiene, 1- or 2-aryl-1,3-butadiene; 1- or 2-phenyl-1,3-butadiene; aryl-substituted butadiene such as 2-phenyl-3-methyl-1,3-butadiene; 2-chloro-1,3-butadiene; and halogen-substituted butadiene such as 2-fluoro-1,3-butadiene. Specific examples of non-conjugated straight-chain diolefinic monomer include 1,4-pentadiene; 1,5-hexadiene; and 1,7-octadiene. Specific examples of conjugated cyclic diolefinic monomer include 1,3-cyclohexadiene and 1,3-cyclooctadiene. Specific example of non-conjugated cyclic diolefinic monomer include 2,5-norbornadiene; 5-ethylidenenorbornene; 1,5-cyclohexadiene; and 5-vinylnorbornene.

Among the aforestated diolefinic monomers, conjugated straight-chain diolefinic monomers and non-conjugated cyclic diolefinic monomers are preferably used.

In the copolymer produced by the process according to the present invention, the aforestated diolefinic monomers are polymerized to constitute diolefinic repeating unit. In the case where the diolefinic repeating unit is composed of the conjugated straight-chain diolefinic monomers of the above-described general formula (III), there are two polymerization systems including 1,2-polymerization type represented by the general formula (IV)

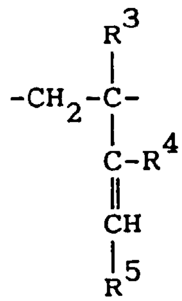

... (IV)

and 1,4-polymerization type represented by the general formula (V)

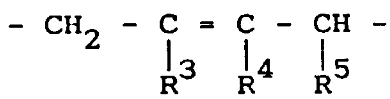

... (V)

In the polymerization according to 1,2-polymerization type, the diolefinic repeating unit forms syndiotactic, isotactic or atactic configuration or mixture thereof, while in the polymerization according to 1,4-polymerization type, the repeating unit forms cis and trans types. The non-conjugated cyclic diolefinic monomers are polymerized into a polymer having trans-annular stereostructure. However, the copolymer produced by the process according to the present invention may have an diolefinic unit of any of the stereostructures insofar as the copolymer has a high degree of syndiotactic configuration.

In the process according to the present invention the above-mentioned comonomers of the components (a) and (b) are copolymerized in the presence of the catalyst comprising as the primary ingredients (A) a transition metal compound and the aforestated (B) a coordination complex compound.

As the transition metal compound, that is, the component (A) of the catalyst, there are available a variety of compounds, which are exemplified by the compounds of Groups 3 to 6 metals of the Periodic Table and lanthanoid compounds. Of these are preferable the compounds of Group 4 metals (titanium, zirconium, hafnium) and vanadium.

Various titanium compounds can be used and a preferred example is at least one compound selected from the group consisting of titanium compounds and titanium chelate compounds represented by the general formula:

$$TiR^{6}_{a}R^{7}_{b}R^{8}_{c}R^{9}_{4-(a+b+c)} \qquad (VI)$$

or

$$TiR^{6}_{d}R^{7}_{e}R^{8}_{3-(d+e)} \qquad (VII)$$

wherein $R^6$, $R^7$, $R^8$ and $R^9$ are each a hydrogen atom, an alkyl group having 1 to 20 carbon atoms, an alkoxy group having 1 to 20 carbon atoms, an aryl group having 6 to 20 carbon atoms, an alkylaryl group, an arylalkyl group, an acyloxy group having 1 to 20 carbon atoms, a cyclopentadienyl group, a substituted cyclopentadienyl group, an indenyl group or a halogen atom; a, b and c are each an integer of 0 to 4; and d and e are each an integer of 0 to 3.

$R^6$, $R^7$, $R^8$ and $R^9$ in the formulae (VI) and (VII) each represent a hydrogen atom, an alkyl group having 1 to 20 carbon atoms (specifically, methyl group, ethyl group, propyl group, butyl group, amyl group, isoamyl group, isobutyl group, octyl group and 2-ethylhexyl group), an alkoxy group having 1 to 20 carbon atoms (specifically, methoxy group, ethoxy group, propoxy group, butoxy group, amyloxy group, hexyloxy group, and 2-ethylhexyloxy group), an aryl group having 6 to 20 carbon atoms, an alkylaryl group, an arylalkyl group (specifically, phenyl group, tolyl group, xylyl group and benzyl group), an acyloxy group having 1 to 20 carbon atoms (specifically, heptadecylcarbonyloxy group), a cyclopentadienyl group, a substituted cyclopentadienyl group (specifically, methylcyclopentadienyl group, 1,3-dimethylcyclopentadienyl group and pentamethylcyclopentadienyl group), an indenyl group or a halogen atom (specifically, chlorine, bromine, iodine and fluorine). These $R^6$, $R^7$, $R^8$ and $R^9$ may be the same as or different from each other. Furthermore, a, b and c are each an integer of 0 to 4, and d and e are each an integer of 0 to 3.

Other preferred titanium compounds include a titanium compound represented by the formula:

$$TiRXYZ \qquad (VIII)$$

wherein R represents a cyclopentadienyl group, a substituted cyclopentadienyl group or an indenyl group; X, Y and Z are each independently a hydrogen atom, an alkyl group having 1 to 12 carbon atoms, an alkoxy group having 1 to 12 carbon atoms, an aryl group having 6 to 20 carbon atoms, an aryloxy group having 6 to 20 carbon atoms, an arylalkyl group having 6 to 20 carbon atoms or a halogen atom.

The substituted cyclopentadienyl group represented by R in the above formula is, for example, a cyclopentadienyl group substituted by at least one alkyl group having 1 to 6 carbon atoms, more specifically, methylcyclopentadienyl group, 1,3-dimethylcyclopentadienyl group, 1,2,4-trimethylcyclopentadienyl group, 1,2,3,4-tetramethylcyclopentadienyl group and pentamethylcyclopentadienyl group. In addition, X, Y and Z are each independently a hydrogen atom, an alkyl group having 1 to 12 carbon atoms (specifically, methyl group, ethyl group, propyl group, n-butyl group, isobutyl group, amyl group, isoamyl group, octyl group and 2-ethylhexyl group), an alkoxy group having 1 to 12 carbon atoms (specifically, methoxy group, ethoxy group, propoxy group, butoxy group, amyloxy group, hexyloxy group, octyloxy group and 2-ethylhexyl group), an aryl group having 6 to 20 carbon atoms (specifically, phenyl group and naphthyl group), an aryloxy group having 6 to 20 carbon atoms (specifically, phenoxy group), an arylalkyl group having 6 to 20 carbon atoms (specifically, benzyl group) or a halogen atom (specifically, chlorine, bromine, iodine and fluorine).

Specific examples of the titanium compound represented by the formula (VIII) include cyclopentadienyltrimethyltitanium, cyclopentadienyltriethyltitanium, cyclopentadienyltripropyltitanium, cyclopentadienyltributyltitanium, methylcyclopentadienyltrimethyltitanium, 1,3-dimethylcyclopentadienyltrimethyltitanium, pentamethylcyclopentadienyltrimethyltitanium, pentamethylcyclopentadienyltriethyltitanium, pentamethylcyclopentadienyltripropyltitanium, pentamethylcyclopentadienyltributyltitanium, cyclopentadienylmethyltitanium dichloride, cyclopentadienylethyltitanium dichloride, pentamethylcyclopentadienylmethyltitanium dichloride, pentamethylcyclopentadienylethyltitanium dichloride, cyclopentadienyldimethyltitanium monochloride, cyclopentadienyldiethyltitanium monochloride, cyclopentadienyltitanium trimethoxide, cyclopentadienyltitanium triethoxide, cyclopentadienyltitanium tripropoxide, cyclopentadienyltitanium triphenoxide, pentamethylcyclopentadienyltitanium trimethoxide, pentamethylcyclopentadienyltitanium triethoxide, pentamethylcyclopentadienyltitanium tripropoxide, pentamethylcyclopentadienyltitanium tributoxide, pentamethylcyclopentadienyltitanium triphenoxide, cyclopentadienyltitanium trichloride, pentamethylcyclopentadienyltitanium trichloride, cyclopentadienylmethoxyltitanium dichloride, cyclopentadienyldimethoxytitanium chloride, pentamethylcyclopentadienylmethoxytitanium dichloride, cyclopentadienyltribenzyltitanium, pentamethylcyclopentadienyltribenzyltitanium, pentamethylcyclopentadienylmethyldiethoxytitanium, indenyltitanium trichloride, indenyltitanium trimethoxide, indenyltitanium triethoxide, indenyltrimethyltitanium and indenyltribenzyltitanium.

Of these titanium compounds, a compound not containing halogen atom is preferred and a titanium compound having one $\pi$ electron type ligand as mentioned above is particularly preferred.

Furthermore, a condensed titanium compound represented by the following formula may be used as the titanium compound.

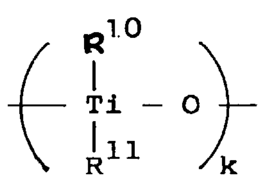

(IX)

wherein $R^{10}$ and $R^{11}$ each represent a halogen atom, an alkoxy group having 1 to 20 carbon atoms or an acyloxy group; and m is an integer of 2 to 20.

Furthermore, the above titanium compounds may be used in the form of a complex formed with an ester, an ether, or a phosphine.

The trivalent titanium compound represented by the formula (VII) typically includes a trihalogenated titanium such as titanium trichloride; and a cyclopentadienyltitanium compound such as cyclopentadienyltitanium dichloride, and also those obtained by reducing a tetravalent titanium compound. These trivalent titanium compounds may be used in the form of a complex formed with an ester, an ether, or a phosphine.

In addition, the zirconium compound used as the transition metal compound includes tetrabenzylzirconium, zirconium tetraethoxide, zirconium tetrabutoxide, bisindenylzirconium dichloride, triisopropoxyzirconium chloride, zirconium benzyl dichloride and tributoxyzirconium chloride, hafnium compound includes tetrabenzyl hafnium, hafnium tetraethoxide and hafnium tetrabutoxide, and vanadium compound includes vanadyl bisacetylacetonato, vanadium triacetylacetonato, vanadyl triethoxide and vanadyl tripropoxide. Of these transition metal compounds, the titanium compounds are particularly desirable.

As the transition metal compound which constitutes the component (A) of the catalyst, there is used a transition metal compound with two ligands having conjugated π electrons, for example, at least one compound selected from the group consisting of the transition metal compound represented by the general formula:

$$M^1R^{12}R^{13}R^{14}R^{15} \qquad (X)$$

wherein $M^1$ is titanium, zirconium or hafnium; $R^{12}$ and $R^{13}$ are each a cyclopentadienyl group, substituted cyclopentadienyl group, indenyl group or fluorenyl group; and $R^{14}$ and $R^{15}$ are each a hydrogen atom, halogen, hydrocarbon radical having 1 to 20 carbon atoms, alkoxy group having 1 to 20 carbon atoms, amino group or thioalkoxy group having 1 to 20 carbon atoms, but $R^{12}$ and $R^{13}$ may be each cross-linked by a hydrocarbon radical having 1 to 5 carbon atoms, alkylsilyl group having 1 to 20 carbon atoms and 1 to 5 silicon atoms or germanium-containing hydrocarbon group having 1 to 20 carbon atoms and 1 to 5 germanium atoms.

In more detail, each of $R^{12}$ and $R^{13}$ in the general formula (X) designates a cyclopentadienyl group, substituted cyclopentadienyl group, more specifically, methylcyclopentadienyl group; 1,3-dimethylcyclopentadienyl group; 1,2,4-trimethylcyclopentadienyl group; 1,2,3,4-tetramethylcyclopentadienyl group; pentamethylcyclopentadienyl group; trimethylsilylcyclopentadienyl group; 1,3-di(trimethylsilyl)cyclopentadienyl group; 1,2,4-tri(trimethylsilyl)cyclopentadienyl group; tert-butylcyclopentadienyl group; 1,3-di(tert-butyl)cyclopentadienyl group; or 1,2,4-tri(tert-butyl) cyclopentadienyl group, indenyl group, substituted indenyl group, more specifically, methylindenyl group; dimethylindenyl group; trimethylindenyl group, fluorenyl group, or substituted fluorenyl group such as methylfluorenyl group, and may be the same or different and cross-linked by an alkylidene group having 1 to 5 carbon atoms, more specifically, methylidyne group; ethylidene group; propylidene group; dimethylcarbyl group or an alkylsilyl group having 1 to 20 carbon atoms and 1 to 5 silicon atoms, more specifically, dimethylsilyl group; diethylsilyl group; dibenzylsilyl group. Each of $R^{14}$ and $R^{15}$ independently indicates, as described above but more specifically, a hydrogen atom; an alkyl group having 1 to 20 carbon atoms such as methyl group, ethyl group propyl group, n-butyl group, isobutyl group, amyl group, isoamyl group, octyl group or 2-ethylhexyl group; an aryl group having 6 to 20 carbon atoms such as phenyl group or naphthyl group; an arylalkyl group having 7 to 20 carbon atoms such as benzyl group; an alkoxyl group having 1 to 20 carbon atoms such as methoxyl group, ethoxyl group, propoxyl group, butoxyl group, amyloxy group, hexyloxy group, octyloxy group or 2-ethylhexyloxy group; an aryloxy group having 6 to 20 carbon atoms such as phenoxy group; an amino group; or a thioalkoxyl group having 1 to 20 carbon atoms.

Specific examples of the transition-metal compounds represented by the general formula (X) include bis(cyclopentadienyl)dimethyltitanium; bis(cyclopentadienyl) diethyltitanium; bis(cyclopentadienyl)dipropyltitanium; bis(cyclopentadienyl)dibutyltitanium: bis(methylcyclopentadienyl)dimethyltitanium; bis(tert-butylcyclopentadienyl)dimethyltitanium; bis(1,3-dimethylcyclopentadienyl)dimethyltitanium; bis(1,3-di-tert-butylcyclopentadienyl)dimethyltitanium; bis (1,2,4-trimethylcyclopentadienyl)dimethyltitanium; bis(1,2,3,4-tetramethylcyclopentadienyl)dimethyltitanium; bis(pentamethylcyclopentadienyl)dimethyltitanium; bis(trimethylsilylcyclopentadienyl)dimethyltitanium; bis(1,3-di(trimethylsilyl)cyclopentadienyl)dimethyltitanium; bis(1,2,4-tri(trimethylsilyl)cyclopentadienyl)dimethyltitanium; bis(indenyl) dimethyltitanium; bis (fluorenyl)dimethyltitanium; methylenebis(cyclopentadienyl)dimethyltitanium; ethylidenebis(cyclopentadienyl)dimethyltitanium; methylenebis(2,3,4,5-tetramethylcyclopentadienyl)dimethyltitanium; ethylidenebis (2,3,4,5-tetramethylcyclopentadienyl)dimethyltitanium; dimethylsilylbis(2,3,4,5-tetramethylcyclopentadienyl)dimethyltitanium; methylenebisindenyldimethyltitanium; ethylidenebisindenyldimethyltitanium; dimethylsilylbisindenyldimethyltitanium; methylenebisfluorenyldimethyltitanium; ethylidenbisfluorenyldimethyltitanium; dimethylsilylbisfluorenyldimethyltitanium; methylene(tert-butylcyclopentadienyl)(cyclopentadienyl)dimethyltitanium; methylene(cyclopentadienyl)(indenyl)dimethyltitanium; ethylidene(cyclopentadienyl)(indenyl)dimethyltitanium; dimethylsilyl(cyclopentadienyl) (indenyl)dimethyltitanium; methylene(cyclopentadienyl)(fluorenyl)dimethyltitanium; ethylidene(cyclopentadienyl)(fluorenyl)dimethyltitanium; dimethylsilyl(cyclopentadienyl)(fluorenyl)dimethyltitanium; methylene(indenyl)(fluorenyl) dimethyltitanium; ethylidene(indenyl)(fluorenyl)dimethyltitanium; dimethylsilyl(indenyl)(fluorenyl)dimethyltitanium; bis (cyclopentadienyl)dibenzyltitanium; bis(tert-butylcyclopentadienyl)dibenzyltitanium; bis(methylcyclopentadienyl) dibenzyltitanium; bis(1,3-dimethylcyclopentadienyl)dibenzyltitanium; bis(1,2,4-trimethylcyclopentadienyl)dibenzyltitanium; bis(1,2,3,4-tetramethylcyclopentadienyl)dibenzyltitanium; bis(pentamethylcyclopentadienyl)dibenzyltitanium; bis(trimethylsilylcyclopentadienyl)dibenzyltitanium; bis[1,3-di-(trimethylsilyl)cyclopentadienyl]dibenzyltitanium; bis[1,2,4-tri(trimethylsilyl)cyclopentadienyl] dibenzyltitanium; bis(indenyl)dibenzyltitanium; bis(fluorenyl)dibenzyltitanium; methylenebis(cyclopentadienyl)dibenzyltitanium; ethylidenebis(cyclopentadienyl)dibenzyltitanium; methylenebis (2,3,4,5-tetramethylcyclopentadienyl)dibenzyltitanium; ethylidenebis(2,3,4,5-tetramethylcyclopentadienyl) dibenzyltitanium; dimethylsilylbis(2,3,4,5-tetramethylcyclopentadienyl)dibenzyltitanium; methylcyclopentadienyl)dibenzyltitanium; ethylidenebis(indenyl)dibenzyltitanium; dimethylsilylbis(indenyl)dibenzyltitanium; methylenebis(fluorenyl)dibenzyltitanium; ethylidenebis(fluorenyl)dibenzyltitanium; dimethylsilylbis(fluorenyl)dibenzyltitanium; methylene(cyclopentadienyl)(indenyl)benzyltitanium; ethylidene(cyclopentadienyl)(indenyl)benzyltitanium; dimethylsilyl(cyclopentadienyl)(indenyl)dibenzyltitanium; methylene(cyclopentadienyl)(fluorenyl)dibenzyltitanium; ethylidene(cyclopentadienyl)(fluorenyl)dibenzyltitanium; dimethylsilyl(cyclopentadienyl)(fluorenyl)dibenzyltitanium; methylene(indenyl)(fluorenyl) dibenzyltitanium; ethylidene(indenyl)(fluorenyl)dibenzyltitanium; dimethylsilyl(indenyl)(fluorenyl)dibenzyltitanium; biscyclopentadienyltitanium dimethoxide; biscyclopentadienyltitanium diethoxide; biscyclopentadienyltitanium dipropoxide; biscyclopentadienyltitanium dibutoxide; biscyclopentadienyltitanium diphenoxide; bis(methylcyclopentadienyl)titanium dimethoxide; bis(1,3-dimethylcyclopentadienyl)titanium dimethylcyclopentadienyl)titanium dimethoxide; trimethylcyclopentadienyl)titanium dimethoxide; dimethoxide; bispentamethylcyclopentadienyltitanium dimethoxide; bis (trimethylsilylcyclopentadienyl)titanium dimethoxide; bis[1,3-di-(trimethylsilyl)cyclopentadienyl]titanium dimethoxide; bis[1,2,4-tri(trimethylsilyl)cyclopentadienyl] titanium dimethoxide; bisindenyltitanium dimethoxide; bisfluorenyltitanium dimethoxide; methylenebiscyclopentadienyltitanium dimethoxide; ethylidenebiscyclopentadienyltitanium dimethoxide; methylenebis(2,3,4,5-tetramethylcyclopentadienyl)titanium dimethoxide; ethylidenebis(2,3,4,5-tetramethylcyclopentadienyl)titanium dimethoxide; dimethylsilylbis(2,3,4,5-tetramethylcyclopentadienyl)titanium dimethoxide; methylenebisindenyltitanium dimethoxide; methylenebis(methylindenyl)titanium dimethoxide; ethylidenebisindenyltitanium dimethoxide; dimethylsilylbisindenyltitanium dimethoxide; methylenebisfluorenyltitanium dimethoxide; methylenebis (methylfluorenyl)titanium dimethoxide; ethylidenebisfluorenyltitanium dimethoxide; dimethylsilylbisfluorenyltitanium dimethoxide; methylene(cyclopentadienyl)(indenyl)titanium dimethoxide; ethylidene(cyclopentadienyl)(indenyl)titanium dimethoxide; dimethylsilyl(cyclopentadienyl)(indenyl)titanium dimethoxide; methylene(cyclopentadienyl)(fluorenyl) titanium dimethoxide; ethylidene(cyclopentadienyl)(fluorenyl)titanium dimethoxide; dimethylsilyl(cyclopentadienyl)(fluorenyl)titanium dimethoxide; methylene(indenyl)(fluorenyl)titanium dimethoxide; ethylidene(indenyl)(fluorenyl)titanium dimethoxide; dimethylsilyl(indenyl)(fluorenyl)titanium dimethoxide; isopropylidene(cyclopentadienyl)(fluorenyl)titanium dichloride; and isopropylidene(cyclopentadienyl)(fluorenyl)titanium dimethoxide.

Examples of the transition metal compounds represented by the formula (X) wherein $M^1$ is zirconium include ethylidenbiscyclopentadienylzirconium dichloride, ethylidenebiscyclopentadienylzirconium dimethoxide, and dimethylsilylbiscyclopentadienylzirconium dimethoxide. Examples of the hafnium compounds according to the general formula (X) include ethylidenebiscyclopentadienylhafnium dimethoxide, and dimethylsilylbiscyclopentadienylhafnium dimethoxide. Particularly desirable transition-metal compounds among them are titanium compounds.

In addition to the combinations of the above, the compound may be a bidentate coordination complex such as 2,2'-thiobis(4-methyl-6-tert-butylphenyl)titanium diisopropoxide and 2,2'-thiobis(4-methyl-6-tert-butylphenyl)titanium dimethoxide.

As the component (B) which constitutes the primary ingredient of the catalyst in the process according to the present invention, that is, a coordination complex compound comprising a cation and an anion in which a plurality of radicals are bonded to a metal, a variety of such coordination complex compounds are available, and those represented by the following general formulae (XI) or (XII) are preferably employed :

$$([L^1\text{-}H]^{g+})_h([M^1X^1X^2\text{---}X^n]^{(n-p)-})_i \qquad (XI)$$

or

$$([L^2]^{g+})_h([M^3X^1X^2\text{---}X^n]^{(n-p)-})_i \qquad (XII)$$

wherein $L^2$ is $M^4$, $T^1T^2M^5$ or $T^3{}_3C$ as hereinafter descirbed; $L_1$ is a Lewis base; $M^2$ and $M^3$ are each a metal selected from Groups 5 to 15 of the Periodic Table ; $M^4$ is a metal selected from Groups 8 to 12 of the Periodic Table; $M^5$ is a metal selected from Groups 8 to 10 of the Periodic Table; $X^1$ to $X^n$ are each a hydrogen atom, dialkylamino group, alkoxy group, aryloxy group, alkyl group having 1 to 20 carbon atoms, aryl group, alkylaryl group, arylalkyl group, substituted alkyl group, substituted aryl group, organometalloid group or halogen atom; $T^1$ and $T^2$ are each a cyclopentadienyl group, substituted cyclopentadienyl group, indenyl group or fluorenyl group; $T^3$ is an alkyl group; p is the valency of each of $M^2$ and $M^3$, indicating an integer of 1 to 7; n is an integer of 2 to 8; g is the ion valency of each of $[L^1\text{-H}]$ and $[L^2]$, indicating an integer of 1 to 7; h is an integer of 1 or more; and i=hxg/(n-p).

Specific examples of $M^2$ and $M^3$ include B, Al, Si, P, As, and Sb; those of $M^4$ include Ag and Cu; and those of $M^5$ include Fe, Co and Ni. Specific examples of $X^1$ to $X^n$ include dialkylamino group such as dimethylamino and diethylamino; alkoxyl group such as methoxy, ethoxy and n-butoxy; aryloxy group such as phenoxy, 2,6-dimethylphenoxy and naphthyloxy; alkyl group having 1 to 20 carbon atoms such as methyl, ethyl, n-propyl, iso-propyl, n-butyl, n-octyl and 2-ethylhexyl; aryl group having 6 to 20 carbon atoms, alkylaryl group or arylalkyl group such as phenyl, p-tolyl, benzyl, pentafluorophenyl, 3,5-di(trifluoromethyl)phenyl, 4-tert-butylphenyl, 2,6-dimethylphenyl, 3,5-dimethylphenyl, 2,4-dimethylphenyl and 1,2-dimethylphenyl; halogen such as F, Cl, Br and I; and organometalloid group such as pentamethylantimony group, trimethylsilyl group, trimethylgermyl group, diphenylarsine group, dicyclohexylantimony group and diphenylboron group. Specific examples of substituted cyclopentadienyl of $T^1$ and $T^2$ include methylcyclopentadienyl, butylcyclopentadienyl and pentamethylcyclopentadienyl.

Among the compounds represented by the above-mentioned general formula (XI) or (XII) specific examples of preferably usable compounds include, as the compound of general formula (XI), triethylammonium tetraphenylborate, tri(n-butyl)ammonium tetraphenylborate, trimethylammonium tetraphenylborate, triethylammonium tetra(pentafluorophenyl)borate, tri(n-butyl)ammonium tetra(pentafluorophenyl)borate, and triethylammonium hexafluoroarsenate, pyridinium tetra(pentafluorophenyl)borate, pyrrolium tetra(pentafluorophenyl)borate, N,N-dimethylanilinium tetra(pentafluorophenyl)borate, methyldiphenylammonium tetra(pentafluorophenyl)borate, and as the compound of general formula (XII), ferrocenium tetraphenylborate, dimethylferrocenium tetra(pentafluorophenyl)borate, ferrocenium tetra(pentafluorophenyl)borate, decamethylferrocenium tetra(pentafluorophenyl)borate, acetylferrocenium tetra(pentafluorophenyl)borate, formylferrocenium tetra(pentafluorophenyl)borate, cyanoferrocenium tetra(pentafluorophenyl)borate, silver tetraphenylborate, silver tetra(pentafluorophenyl)borate, trityltetraphenylborate, trityltetra(pentafluorophenyl)borate, silver hexafluoroarsenate, silver hexafluoroantimonate, and silver tetrafluoroborate.

In the process of the present invention, if desired, in addition to the above components (A) and (B), another catalytic components such as organoaluminum cmpound (C) may be added.

The organoaluminum compound (C) includes the compound represented by the formula:

$$R^{16}_{j}Al(OR^{17})_{x}H_{y}X'_{z} \qquad (XIII)$$

wherein $R^{16}$ and $R^{17}$ each independently represent an alkyl group having 1 to 8 carbon atoms, preferably 1 to 4 carbon atoms; X' represents a halogen; j, x, y and z are $0<j\leqq 3$, $0\leqq x<3$, $0\leqq y<3$ and $0\leqq z<3$, respectively, and $j+x+y+z=3$. The activity of the catalyst is further improved by adding the above compound.

The organoaluminum compound represented by the above formula (XIII) can be exemplified as shown below. Those corresponding to y=z=0 are represented by the formula: $R^{16}_{j}Al(OR^{17})_{3-j}$ (wherein $R^{16}$ and $R^{17}$ are as defined above and j is preferably a number of $1.5\leqq j\leqq 3$). Those corresponding to x=y=0 are represented by the formula: $R^{16}_{j}AlX'_{3-j}$ (wherein $R^{16}$ and X' are as defined above and j is preferably a number of $0<j<3$). Those corresponding to x=z=0 are represented by the formula: $R^{16}_{j}AlH_{3-j}$ (wherein $R^{16}$ is as defined above and j is preferably a number of $2\leqq j<3$). Those corresponding to y=0 are represented by the formula: $R^{16}_{j}Al(OR^{17})_{x}X'_{z}$ (wherein $R^{16}$, $R^{17}$ and X' are as defined above and $0<j\leqq 3$, $0\leqq x<3$, $0\leqq z<3$ and $j+x+z=3$).

In the organoaluminum compound represented by the formula (XIII), the compound wherein x=z=0 and j=3 is selected from, for example, trialkylaluminum such as trimethylaluminum, triethylaluminum and tributylaluminum, or combination thereof. In the case of y=z=0 and $1.5\leqq j<3$, included are dialkylaluminum alkoxide such as diethylaluminum ethoxide and dibutylaluminum butoxide; alkylaluminum sesquialkoxide such as ethylaluminum sesqui-ethoxide and butylaluminum sesquibutoxide; as well as partially alkoxylated alkylaluminum having an average composition represented by $R^{16}_{2.5}Al(OR^{17})_{0.5}$. Examples of the compound corresponding to the case where x=y=0 include a partially halogenated alkylaluminum including dialkylaluminum halogenide (j=2) such as diethylaluminum chloride, dibutylaluminum chloride and diethylaluminum bromide; alkylaluminum sesquihalogenide (j=1.5) such as ethylaluminum sesquichloride, butylaluminum sesquichloride and ethylaluminum sesquibromide; and alkylaluminum dihalogenide (j=1) such as ethylaluminum dichloride, propylaluminum dichloride and butylaluminum dibromide. Examples of the compound corresponding to the case in which x=z=0 includes a partially hydrogenated alkylaluminum including dialkylaluminum hydride (j=2) such as diethylaluminum hydride and dibutylaluminum hydride; alkylaluminum dihydride (j=1) such as ethylaluminum dihydride and propylaluminum dihydride. Examples of the compound corresponding to the case in which y=0 include a partially alkoxylated or halogenated alkylaluminum such as ethylaluminumethoxy chloride, butylaluminumbutoxy chloride and ethylaluminumethoxy bromide (j=x=z=1). Of these, triisobutylaluminum and triisobutylaluminum hydride are particularly suitable.

The catalyst to be used in the process according to the present invention comprises the above mentioned Components (A) and (B) or (A), (B) and (C) as the main components, and in addition, other catalytic components may be added if desired.

The method of adding each component of the catalyst to the reaction system is available in a variety of manners without specifical limitation, and is exemplified by (1) a method wherein each component is separately added to the system to bring the each component into contact with the above-mentioned starting comonomers; (2) a method wherein the reaction product of the component (A) and component (B) is added to the system to bring the product into contact with the above-mentioned starting comonomers; (3) a method wherein the reaction product of any two of the components (A), (B) and (C) is incorporated with the balance and the mixture thereof is added to the system to bring the mixture into contact with the above-mentioned starting comonomers, more specifically, a method wherein the component (C) is added to the reaction product of components (A) and (B) and the mixture thereof is added to the system to bring the mixture into contact with the above-mentioned starting comonomer or a method wherein the component (B) is added to the reaction product of components (A) and (C) and the mixture thereof is added to the system to bring the mixture into contact with the above-mentioned starting comonomer; and (4) a method wherein the reaction product of the three components (A), (B) and (C) is added to the system to bring the product into contact with the above-mentioned starting comooners. In the preceding case, the reaction product of components (A) and (B) may be previously isolated and purified.

The compounding ratio of the components (A) and (B) in the above-mentioned catalyst varies depending on various conditions, and can not be defined unconditionally, but usually it is 0.1:1 to 1:0.1 in terms of the molar ratio of the component (A) to the component (B). In the case of the component (C) being used, the molar ratio of the component (A) to the component (C) is 1:0.1 to 1:1000, preferably 1:0.1 to 1:200.

In the process according to the present invention, (a) a styrenic monomer and (b) an olefinic monomer or a diolefinic monomer are copolymerized in the presence of the aforestated catalyst, and the copolymerization may be put into practice by a variety of ways including bulk, solution and suspension polymerization.

The usable solvents in the copolymerization are exemplified by aliphatic hydrocarbons such as pentane, hexane, heptane and decane, alicyclic hydrocarbons such as cyclohexane and aromatic hydrocarbons such as benzene, toluene and xylene. Polymerization temperature is not specifically limited, but it is usually 0 to 100°C, preferably 10 to 80°C. Polymerization time is usually 5 minutes to 24 hours, preferably 1 hour or longer.

For the purpose of modifying the molecular weight of the copolymer to be obtained, it is effective to carry out copolymerization reaction in the presence of hydrogen.

The styrenic copolymer obtainable by the process according to the present invention has a high degree of syndiotactic configuration in the main chain structure of the repeating unit derived from styrenic monomer. Moreover, the styrenic copolymer having an extremely high syndiotacticity and purity can be obtained by subjecting the copolymer obtained by the above procedure to deashing treatment with a cleaning liquid containing hydrochloric acid as necessary, further cleaning, drying under reduced pressure, followed by cleaning with a solvent such as methyl ethyl ketone (MEK) for removing MEK insolubles.

The styrenic copolymer thus obtained comprises at least one kind of repeating unit derived from (a) a styrenic monomer (repeating unit "a") and at least one kind of repeating unit derived from (b) an olefinic monomer or a diolefinic monomer (repeating unit "b"). Therefore, the process according to the present invention enables the synthesis of not only bipolymers but also terpolymers and quadripolymers comprising the aforementioned repeating units. The content of the above repeating unit "b" is suitably selected in accordance with the feed ratio of the starting monomer, and in the case where the repeating unit "b" is derived from an olefinic monomer, the ratio of the repeating unit "b" is usually 0.1 to 99.9% by weight, desirably 1 to 99% by weight, more desirably 5 to 95% by weight based on the total weight of the copolymer. The above ratio less than 0.1% by weight results in failure to sufficiently attain the effect of improvement such as lowering of glass transition point and improvement on impact resistance, while the ratio exceeding, 99.9% by weight results in failure to develop heat resistance which characterizes the styrenic polymer having syndiotactic configuration.

On the other hand in the case where the repeating unit "b" is derived from a diolefinic monomer, the ratio of the repeating unit "b" is usually 0.1 to 50% by weight, desirably 1.0 to 20% by weight, based on the total weight of the copolymer. The above ratio less than 0.1% by weight fails to sufficiently exihibit the effect of improvement such as lowering of glass transition point and improvement on flexibility, etc. which is one of the objects of the present invention, while that more than 50% by weight leads to the disadvantage inherent to the diolefinic polymer on the physical properties in that crystallization and chemical resistance which characterizes the syndiotactic styrenic polymers are improved together with embrittlement of the polymer.

The copolymer thus obtained has a molecular weight, in terms of intrinsic viscosity of usually 0.07 to 20 dl/g, preferably 0.3 to 10 dl/g as measured in 1,2,4-trichlororbenzene at 135°C. The intrinsic viscosity less than 0.07 dl/g results in a product unsuitable for practical use because of poor dynamic properties thereof, whereas that more than 20 dl leads to a product difficult in ordinary melt forming.

The above-mentioned styrenic copolymer may be of a varity of stereostructures, but has syndiotactic configuration in the "main chain structure of the repeating unit "a", that is, the styrenic repeating unit.

Here, the styrenic polymer which has a high degree of syndiotactic configuration means that its stereochemical

structure is of high degree of syndiotactic configuration, i,e. the stereostructure in which phenyl groups or substituted phenyl groups as side chains are located alternately at opposite directions relative to the main chain consisting of carbon-carbon bonds. Tacticity is quantitatively determined by the nuclear magnetic resonance method ($^{13}C$-NMR method) using carbon isotope. The tacticity as determined by the $^{13}C$-NMR method can be indicated in terms of proportions of structural units continuously connected to each other, i.e., a diad in which tow structural units are connected to each other, a triad in which three structural units are connected to each other and a pentad in which five structural units are connected to each other. "The styrenic copolymers having such a high degree of sundiotactic configuration as mentioned in the present invention means a copolymer having such a syndiotacticity that the proportion of racemic diad is at least 75%, preferably at least 85%, or the proportion of racemic pentad is at least 30%, preferably at least 50% in the main chain structure of styrenic repeating units.

However, the degree syndiotactic configuration varies to some extent depending on the types of substituents and the proportion of the repeating unit "a".

By virtue of using a highly active and comparatively inexpensive catalyst, the process according to the present invention is capable of reducing the requirement of the catalyst in the production of a styrenic copolymer as well as the residual catalyst contained in the copolymer obtained, thus unnecessitating or simplifying the deashing process, and therefore enables efficient production of a styrenic copolymer having a high degree of syndiotactic configuration in its stereochemical structure along with the reduction of the catalyst cost. Consequently the copolymer obtained by the process of the present invention proves to be a resin excellent in heat resistance and mechanical strength and finds a wide diversity of effective- applications as raw materials of various molded products.

In what follows, the present invention will be described in more detail with reference to examples and comparative examples.

Example 1

(1) Synthesis of catalyst

Preparation of ferrocenium tetra(pentafluorophenyl)borate

Pentafluorophenyllithium which was prepared from 152 mmol of bromopentafluorobenzene and 152 mmol of butyllithium was reacted with 45 mmol of trichloroboron in hexane to produce tri(pentafluorophenyl)boron as white solid, 41 mmol of which was reacted with 41 mmol of pentafluoropenyllithium to produce lithium tetra(pentafluorophenyl) borate as white solid and isolate the same.

The 20 mmol (3.7 g) of ferrocene and 40 ml of concentrated sulfuric acid were reacted at room temperature for 1 hour to obtain a navy blue solution, which was poured in 1 1 water with stirring to form a dark blue solution. Then the solution was added to 500 ml of aqueous solution of 20 mmol (13.7 g) of lithium tetra(pentafluorophenyl)borate which was previously synthesized to form a light blue precipitate, which was collected by filtration, washed with 500 ml of water 5 times and dried under reduced pressure to obtain 14.7 g of objective ferrocenium tetra(pentafluorophenyl) borate.

(2) Production of styrene-ethylene copolymer

In a 1.0 liter reaction vessel equipped with a stirrer were placed 20 ml of toluene, 180 ml of styrene monomer and 2 mmol of triisobutylaluminum (TIBA) with stirring at a polymerization temperature of 60°C for 30 minutes. Then 33 μmol of ferrocenium tetra(pentafluorophenyl)borate as synthesized in the preceding item (1) was added to the reaction system, followed by the addition thereto of pentamethylcyclopentadienyltribenzyltitanium in an amount of 33 μmol as titanium atom.

Subsequently ethylene monomer was introduced into the reaction vessel from the line for exclusive use to raise the inside pressure up to 8.0 kg/cm$^2$G, followed by polymerization reaction under stirring at 60°C for 1 hour. After the completion of the reaction unreacted gas was discharged to reduce the inside pressure, and methanol was poured into the vessel to arrest reaction. Then, a mixture of methanol and hydrochloric acid was added thereto to decompose the catalyst components.

The styrene-ethylene copolymer was obtained in a yield of 95 g with polymerization activity of 60.1 kg/g-Ti and 1.76 kg/g-Al. The copolymer had an intrinsic viscosity of 2.20 dl/g as measured in 1,2,4-trichlorobenzene at 135°C.

After sufficient drying, 10 mg of the copolymer thus obtained was placed in a sample container for differential scanning calorimetry (DSC), wherein the temperature was raised from 50°C to 300°C at a rate of 20°C/min, maintained at 300°C for 5 min. and thereafter lowered from 300°C to 50°C at a rate of 20°C/min. Again the temperature was raised from 50°C to 300°C at a rate of 20°C/min, during which the endothermic pattern was observed. As a result, the melting temperature of the copolymer was determined to be 264°C. The copolymer was analyzed by $^{13}C$-NMR spectrum anal-

ysis using in 1,2,4-trichlorobenzene at 135°C and as a result, aromatic signals were observed at 145.1 ppm and 145.9 ppm, demonstrating the syndiotactic configuration in the styrenic chain of the copolymer. Also an ethylene signal was observed at 29.5 ppm and the proportion of the ethylene chain was 6.2% by weight.

Comparative Example 1

The procedure in Example 1-(2) was repeated except that after the feeding of toluene and styrene monomer, 10 mmol of methylaluminoxane as Al atom as the catalyst component was added to the reaction system without the use of TIBA, ferrocenium tetra(penta-fluorophenyl)borate and pentamethylcyclopentadienyltribenzyltitanium. After stirring at 60°C for 30 min., 0.05 mmol of pentamethylcyclopentadienyltitanium trimethoxide was added to the mixture to carry out copolymerization for 4 hours.

The copolymer was obtained in a yield of 10.3 g with polymerization activity of 4.3 kg/g-Ti and 0.038 kg/g-Al.

Example 2

Production of styrene-ethylene-propylene terpolymer

In a 1.0 liter reaction vessel equipped with a stirrer which had been purged with argon were placed 400 ml of toluene, 70 ml of styrene monomer and 1 mmol of TIBA with stirring for 30 min. Then 16 μmol of ferrocenium tetra (pentafluorophenyl)borate was added to the mixture, followed by the addition thereto of pentamethylcyclopentadienyltribenzyltitanium in an amount of 16 μmol as titanium atom. Subsequently, propylene monomer was introduced into the reaction vessel from the line for exclusive use to sufficiently replace the inside of the vessel with propylene monomer and thereafter, the pressure in the vessel was raised to 4.5 $kg/cm^2 \cdot G$.

Then the line for exclusive use of propylene was blocked and instead, ethylene monomer was introduced into the vessel to raise the inside pressure up to 9.0 $kg/cm^2 \cdot G$, followed by polymerization reaction under stirring at 50°C for 4 hours. After the completion of the reaction, unreacted gas was discharged to reduce the inside pressure, and methanol was poured into the vessel to arrest reaction.

Thus the styrenic copolymer was obtained in a yield of 30.1 g with polymerization activity of 39.3 kg/g-Ti and 1.12 kg/g-Al.

From the IR spectrum analysis of the copolymer thus obtained, absorptions were recognized at 720, 1150 and 1378 $cm^{-1}$ that are assignable to ethylene propylene structure, and from $^{13}C$-NMR spectrum analysis using 1,2,4-trichlorobenzene as the solvent, absorption was recognized at 145.2 ppm that is assignable to syndiotactic configuration of styrenic chain.

As a result of thermal analysis of the copolymer which was carried out in the same manner as in Example 1-(2), a melting temperature was recognized at 260.1 °C, with an intrinsic viscosity of 1.19 dl/g.

The copolymer has a composition as obtained from $^{1}H$-NMR consisting of 55.2 mol% styrene, 25.0 mol% ethylene and 19.8 mol% propylene.

Comparative Example 2

The procedure in Example 2 was repeated except that 5 mmol of TIBA and 5 mmol of methylaluminoxane was added to the system in place of TIBA, ferrocenium tetra(pentafluorophenyl)borate and pentamethylcyclopentadienyltribenzyltianium which were used as catalyst component in Example 2, and after stirring for 30 min. 50 μmol of pentamethylcyclopentadienyltitanium trimethoxide was added to the system to effect polymerization.

Thus the copolymer was obtained in a yield of 4.32 g with polymerization activity of 1.80 kg/g-Ti and 0.016 kg/g-Ti.

**Claims**

1. A process for producing a styrenic copolymer having such a syndiotaticity that the proportion of the racemic diad is at least 75% in the main structure of styrenic repeating units which comprises copolymerizing (a) a styrenic monomer and (b) an olefinic monomer or a diolefinic monomer in the presence of a catalyst comprising as primary ingredients (A) a transition metal compound and (B) a coordination complex compound comprising a cation and an anion in which a plurality of radicals are bonded to a metal, and optionally (C) an organoaluminum compound, wherein the olefinic monomer is at least one compound represented by the general formula

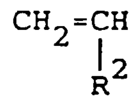

wherein $R^2$ is a hydrogen atom or a saturated hydrocarbon radical having 20 or less carbon atoms.

2. The process according to Claim 1, wherein the olefinic monomer is ethylene, propylene or combination thereof.

3. The process according to Claim 1, wherein the diolefinic monomer is at least one compound selected from conjugated straight-chain diolefin compound represented by the general formula

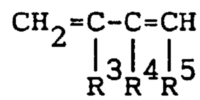

wherein $R^3$ and $R^4$ are each a hydrogen atom, an alkyl, an aryl or a halogen atom and $R^5$ is a hydrogen atom or a saturated hydrocarbon radical having 1 to 6 carbon atoms.

4. The process according to Claim 1, wherein the diolefinic monomer is at least one compound selected from non-conjugated cyclic diolefin compound.

5. The process according to Clam 1, wherein the catalyst comprise the reaction product of the components (A) and (B).

6. The process according to Claim 1, wherein the catalyst comprises a reaction product of any two of the components (A), (B) and (C) and the remaining component.

7. The process according to Claim 1, wherein the catalyst comprises the reaction product of the components (A), (B) and (C).

**Patentansprüche**

1. Verfahren zur Herstellung eines Styrolcopolymers mit einer solchen Syndiotaktizität, daß der Anteil der racemischen Pentaden mindestens 75 % in der Hauptstruktur der Styrolwiederholungseinheiten beträgt, daß umfaßt: Copolymerisieren von (a) einem Styrolmonomer und (b) einem olefinischen Monomer oder einem diolefinischen Monomer in Gegenwart eines Katalysators der als primäre Bestandteile (A) eine Übergangsmetallverbindung und (B) eine Koordinationskomplexverbindung, die ein Kation und ein Anion umfaßt, worin eine Mehrzahl von Radikalen an ein Metall gebunden ist, und wahlweise (C) eine Organoaluminiumverbindung umfaßt, worin das olefinische Monomer mindestens eine Verbindung ist, die durch die allgemeine Formel

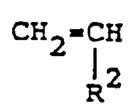

dargestellt wird, worin $R^2$ in Wasserstoffatom oder ein gesättigtes Kohlenwasserstoffradikal mit 20 oder weniger Kohlenstoffatom ist.

2. Verfahren nach Anspruch 1, worin das olefinische Monomer Ethylen, Propylen oder eine Kombination davon ist.

3. Verfahren nach Anspruch 1, worin das diolefinische Monomer mindestens eine Verbindung ist, die aus konjugierten geradkettigen Diolefinverbindungen ausgewählt wird, die durch die allgemeine Formel

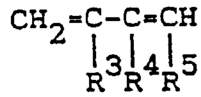

dargestellt werden, worin $R^3$ und $R^4$ jeweils ein Wasserstoffatom, Alkyl, Aryl oder ein Halogenatom sind, und $R^5$ ein Wasserstoffatom oder ein gesättigtes Kohlenwasserstoffradikal mit 1 bis 6 Kohlenstoffatomen ist.

**4.** Verfahren nach Anspruch 1, worin das diolefinische Monomer mindestens eine Verbindung ist, die aus nichtkonjungierten cyclischen Diolefinverbindungen ausgewählt wird.

**5.** Verfahren nach Anspruch 1, worin der Katalysator das Reaktionsprodukt der Komponenten (A) und (B) umfaßt.

**6.** Verfahren nach Anspruch 1, worin der Katalysator ein Reaktionsprodukt von zwei der Komponenten (A), (B) und (C) und der verbleibenden Komponente ist.

**7.** Verfahren nach Anspruch 1, worin der Katalysator das Reaktionsprodukt der Komponenten (A), (B) und (C) ist.

**Revendications**

**1.** Un procédé de préparation d'un copolymère styrénique ayant une syndiotacticité telle que la proportion du diad racémique soit d'au moins 75 % dans la structure principale des mailles styréniques, qui comprend la copolymérisation de (a) un monomère styrénique et de (b) un monomère oléfinique ou un monomère dioléfinique en présence d'un catalyseur comprenant comme ingrédients principaux (A) un composé d'un métal de transition et (B) un composé complexe de coordination comprenant un cation et un anion dans lequel plusieurs radicaux sont liés à un métal, et éventuellement (C) un composé organoaluminium, où le monomère oléfinique est au moins un composé représenté par la formule générale

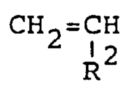

où $R^2$ est un atome d'hydrogène ou un radical d'hydrocarbure saturé ayant 20 atomes de carbone ou moins.

**2.** Le procédé selon la revendication 1, dans lequel le monomère oléfinique est de l'éthylène, du propylène ou une combinaison des deux.

**3.** Le procédé selon la revendication 1, dans lequel le monomère dioléfinique est au moins un composé choisi parmi les composés dioléfiniques conjugués à chaîne droite représentés par la formule générale

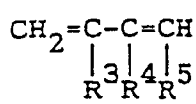

dans laquelle $R^3$ et $R^4$ sont chacun un atome d'hydrogène, un groupe alcoyle ou aryle ou un atome d'halogène et $R^5$ est un atome d'hydrogène ou un radical d'hydrocarbure saturé ayant 1 à 6 atomes de carbone.

**4.** Le procédé selon la revendication 1, dans lequel le monomère dioléfinique est au moins un composé choisi parmi les composes dioléfiniques cycliques non-conjugués.

**5.** Le procédé selon la revendication 1, dans lequel le catalyseur comprend le produit de réaction des constituants (A) et (B).

**6.** Le procédé selon la revendication 1, dans lequel le catalyseur comprend un produit de réaction de deux quelconques des constituants (A), (B) et (C) et le constituant restant.

7. Le procédé selon la revendication 1, dans lequel le catalyseur comprend le produit de réaction des constituants (A), (B) et (C).